# EUROPEAN PATENT APPLICATION

(11) **EP 3 216 904 A1**
(43) Date of publication of application: **13.09.2017**
(21) Application number: 15856532.5
(22) Date of filing: 28.10.2015
(51) Int. Cl.: D04H 1/425, D04H 1/60

(54) **SHEET MANUFACTURING APPARATUS AND METHOD FOR MANUFACTURING SHEET**

(30) Priority: 05.11.2014 JP 2014224979
(71) Applicant: Seiko Epson Corporation, Tokyo 160-8801 (JP)
(72) Inventor: MURAYAMA, Yoshiaki, Suwa-shi Nagano 392-8502 (JP); ICHIKAWA, Kazuhiro, Suwa-shi Nagano 392-8502 (JP); ABE, Nobumasa, Suwa-shi Nagano 392-8502 (JP)
(74) Representative: Miller Sturt Kenyon
(86) International application number: PCT/JP2015/005416
(87) International publication number: WO 2016/072063

(57) **Abstract**

A sheet manufacturing apparatus including a defibrating unit able to defibrate, in air, feedstock containing fiber; and a forming unit forming sheets, using at least part of defibrated material defibrated by the defibrating unit, by heating and pressurizing, and cutting; conveyance direction of the sheet in the forming unit being the short-side direction of the sheet.

## Description

### [Technical Field]

The present invention relates to a sheet manufacturing apparatus and a method of manufacturing sheets.

### [Background]

A paper recycling system having a paper-forming unit that forms paper from defibrated material, and in the paper forming unit conveys a continuous sheet (web) and cuts the conveyed sheet with a cutter, is known from the literature (see, for example, PTL 1).

### [Citation List]

### [Patent Literature]

[PTL 1] JP-A-2012-144819

### [Summary of Invention]

### [Technical Problem]

However, when manufacturing standard A4-size sheets, for example, if the sheet is conveyed, in the paper-forming unit, in the lengthwise direction (long side) of the A4 sheet, the time required to cut a single sheet increases compared with conveying the sheet in the widthwise direction (short side) of the A4 sheet, and productivity drops.

### [Solution to Problem]

The present invention is directed to solving at least part of the foregoing problem, and can be achieved by the embodiments or examples described below.

### [Example 1]

A sheet manufacturing apparatus according to this example has a defibrating unit able to defibrate, in air, feedstock containing fiber; and a forming unit forming sheets, using at least part of defibrated material defibrated by the defibrating unit, by heating and pressurizing, and cutting; the forming unit characterized by the conveyance direction of the sheet being the short-side direction of the sheet.

Because the sheet is conveyed in the direction of the short side of the sheet, the number of sheets that can be conveyed per unit time is greater than when the sheet is conveyed in the lengthwise direction (the time until one sheet can be cut becomes shorter). Sheet productivity can therefore be increased.

### [Example 2]

The sheet manufacturing apparatus in the foregoing example, wherein the sheet conveyed in the short-side direction is a sheet of a common size; the cutting unit in the forming unit has a first cutter that cuts in the direction along the conveyance direction; and the first cutter can cut to a size half the long side of the sheet of the common size.

This configuration enables easily making sheets of a half the size of a sheet of a common size. For example, if the sheet of a common size is an A4-size sheet, by cutting at the size of half the length of an A4-size sheet, A5-size sheets, which are half the size of A4-size sheet, can be easily manufactured.

### [Example 3]

The cutting unit in the forming unit of the sheet manufacturing apparatus described above has a second cutter that cuts perpendicularly to the conveyance direction; and the second cutter can cut to a size twice the length of the short side of a common size sheet.

This configuration enables easily manufacturing sheets that are twice the size of the common-size sheet. For example, if the common-size sheet is an A4-size sheet, by cutting at a size twice the length of the short side of an A4-size sheet, an A3-size sheet, which is twice the size of an A4-size sheet, can be easily manufactured.

### [Example 4]

In the sheet manufacturing apparatus above, the feedstock containing fiber is recovered paper; the size of the recovered paper is the same as the common size; and the recovered paper is conveyed in the direction of the longer of the four sides of the recovered paper.

By feeding the recovered paper along its long direction (lengthwise), the width of the conveyance path can be reduced, and the configuration of the shredder that shreds the supplied recovered paper can be made smaller. Productivity can also be accelerated because the sheet is conveyed in the short-side direction (width direction) in the forming unit.

### [Example 5]

A sheet manufacturing apparatus according to another aspect of the invention has: a laying unit that deposits material containing fiber and resin; and a cutting unit that cuts the web in a direction transverse to the conveyance direction in which the web deposited by the laying unit is conveyed; wherein the length of the direction transverse to the conveyance direction of the web is equal to or longer than the length of the long side of the sheet.

The deposited material forms a continuous web, which by cutting can be made into single sheets. The sheets, in this example, are A4-size sheet, which is an internationally standard printing paper size (printer paper and copy paper). Note that the A4 size is defined in ISO-216, and the size is 210 mm x 297 mm.

Paper of a standard size can be made by cutting both edges of the web; making the width of the web (the length in the direction transverse to the conveyance direction) the length (long side) of the standard size, and then cutting the web transversely to the conveyance direction at the length of the short direction (short side) of the standard size. Alternatively, sheets of a standard size can be made by cutting the web in the direction transverse to the conveyance direction at the length of the short side of the standard size, and then cutting along the conveyance direction at the length of the long side of the standard size.

Furthermore, by setting the width of the deposited material based on the length of the long side of the standard size sheet, sheets of a standard size (such as A4) can be efficiently manufactured. Sheets that are twice the standard size (such as A3), and sheets that are half the standard size (such as A5), can also be manufactured.

### [Example 6]

Another aspect of the invention is a sheet manufacturing method enabling defibrating, in air, feedstock containing fiber, and forming sheets, using at least part of the defibrated material, by heating and pressurizing, and cutting; wherein the conveyance direction of the sheet is the direction of the short side of the sheet.

### [Example 7]

Another example is a sheet manufacturing method including depositing material containing fiber and resin, and cutting the deposited web in a direction transverse to the conveyance direction in which the deposited web is conveyed; wherein the material is deposited so that the length of the direction transverse to the conveyance direction of the deposited web is equal to or longer than the length of the long side of the sheet.

Because the sheet is conveyed in the direction of the short side of the sheet, the number of sheets that can be conveyed per unit time is greater than when the sheet is conveyed in the lengthwise direction (the time until one sheet can be cut becomes shorter). Sheet productivity can therefore be increased.

### [Brief Description of Drawings]

- FIG. 1: illustrates the configuration of a sheet manufacturing apparatus.
- FIG. 2: illustrates the configuration of the cutter.
- FIG. 3: illustrates the configuration of the cutter.
- FIG. 4: illustrates the configuration of the cutter.

### [Description of Embodiments]

A preferred embodiment of the invention is described below with reference to the accompanying figures. Note that parts are shown in the accompanying figures in sizes enabling easy recognition thereof, and differ from the actual scale of the actual parts.

The configuration of s sheet manufacturing apparatus is described first below. The sheet manufacturing apparatus is based on technology for forming a new sheet Pr from feedstock Pu (undefibrated material) such as pulp sheet and recovered paper. A sheet manufacturing apparatus according to this embodiment includes a defibrating unit that defibrates feedstock including fiber in air; a forming unit that, using at least part of the defibrated material defibrated by the defibrating unit, forms sheets by heating and pressurizing, and cutting, and conveys the sheets through the forming unit in the direction of the short side of the four sides of the sheet. The sheet manufacturing method of the invention enables defibrating material containing fiber in air, and, using at least part of the defibrated material defibrated by the defibrating unit, forming sheets by heating and pressurizing, and cutting. Specific embodiments are described below.

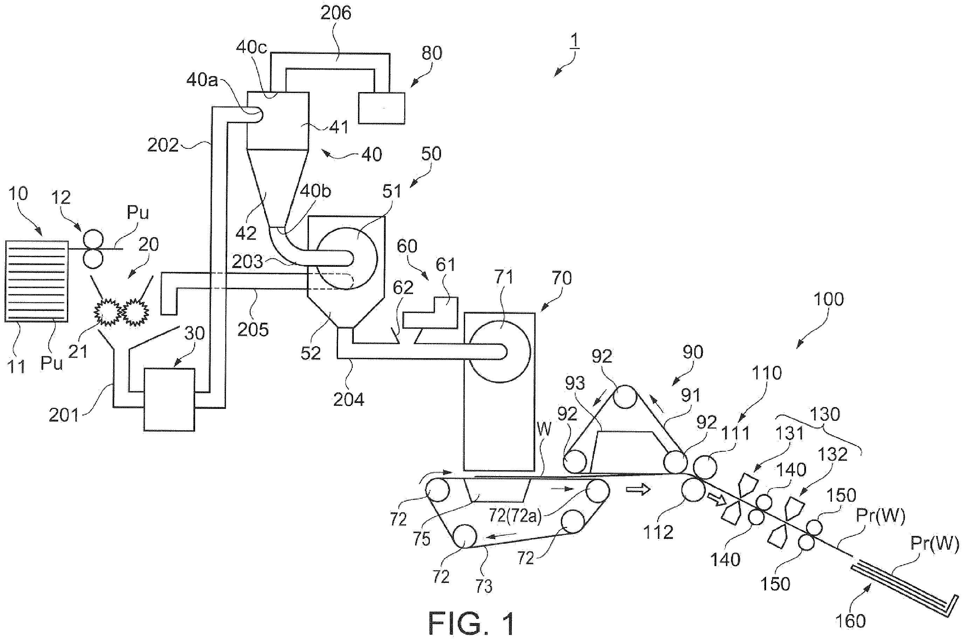

FIG. 1 illustrates the configuration of a sheet manufacturing apparatus according to this embodiment. As shown in FIG. 1, the sheet manufacturing apparatus 1 of this embodiment includes a supply unit 10, shredder 20, defibrating unit 30, classifier 40, separator 50, additive agent feed unit 60, and forming unit 100.

The supply unit 10 supplies recovered paper Pu as the feedstock to the shredder 20. The supply unit 10 includes a tray 11 for stocking a stack of sheets of recovered paper Pu, and an automatic sheet feeder 12 for continuously supplying the recovered paper Pu in the tray 11 to the shredder 20. The recovered paper Pu supplied to the sheet manufacturing apparatus 1 is feedstock containing fiber, and the size of the recovered paper Pu is the same size as a common paper size. For example, if the size of sheets manufactured by the sheet manufacturing apparatus 1 in this embodiment is A4, the most common size of office paper, the size of the recovered paper Pu that is supplied is also A4.

The shredder 20 cuts the recovered paper Pu that is supplied into pieces a few centimeter square. The shredder 20 has shredder blades 21, and is configured similarly to a common office shredder but with a wider shredding width. This enables easily cutting the recovered paper Pu that is supplied into shreds of a suitable size. The recovered paper Pu supplied to the shredder 20 is conveyed lengthwise, that is, in the direction of the long side of the recovered paper Pu. As a result, the width of the conveyance (supply) path can be smaller than when the recovered paper Pu is supplied in the direction of the shorter of the four sides of the recovered paper Pu, and enables making the feed unit that feeds the recovered paper Pu to the shredder 20 smaller. For example, the cutting width of the blades of the shredder can be reduced. The shredded paper is then conveyed through a conduit 201 to the defibrating unit 30.

The defibrating unit 30 defibrates feedstock containing fiber in air. More specifically, the defibrating unit 30 has rotary blades that turn (not shown in the figure), and defibrates the shredded paper supplied from the shredder 20 into fibers. Note that herein the material to be defibrated by the defibrating unit 30 is referred to as undefibrated material, and the material that has past through the defibrating unit 30 is referred to as defibrated material. Note that the defibrating unit 30 in this embodiment of the invention defibrates the shredded paper in a dry process in air. As a result of the defibration process of the defibrating unit 30, ink and toner used for printing, sizing agents, and other coating materials applied to the paper are reduced to particulate several ten microns or less in diameter (referred to below as "ink particles"), and separated from the fibers. The defibrated material output from the defibrating unit 30 is thus the fibers and ink particles obtained by defibration of the shredded paper. The defibrating unit 30 also produces an air current by rotation of the rotary blades, and the defibrated fiber is conveyed in air by this air current through a conduit 202 to the classifier 40. Note that a separate blower that produces an air flow carrying the defibrated fiber through the conduit 202 to the classifier 40 may be separately disposed to the defibrating unit 30 as required.

The classifier 40 classifies, by air, material supplied to the classifier 40. In this example, the classifier 40 separates defibrated material as the supplied material into ink particles and fiber. By using a cyclone unit, the classifier 40 can separate the conveyed defibrated material into ink particles and fibers by an air classification process. Note that an air classifier other than a cyclone may be used. In this event, an elbow-jet or eddy classifier, for example, may be used as the air classifier instead of a cyclone. An air classifier produces a helical air flow, and separates and classifies by means of the differences in centrifugal force resulting from the size and density of the defibrated material, and the cut point can be adjusted by adjusting the speed of the air flow and the centrifugal force. As a result, relatively small, relatively low density ink particles can be separated from the fibers that are larger and more dense than the ink particles.

The classifier 40 in this embodiment uses a tangential inlet cyclone, and comprises an inlet port 40a through which feedstock is introduced from the defibrating unit 30; a cylindrical cyclone body 41 to which the inlet port 40a is tangentially attached; a conical section 42 continuing from the bottom of the cyclone body 41; a lower discharge port 40b disposed to the bottom of the conical section 42; and an upper discharge port 40c disposed to the top center of the cyclone body 41 for discharging fine particulate. The diameter of the conical section 42 decreases from top to bottom.

In the classification process, the air flow carrying the defibrated material introduced from the inlet port 40a of the classifier 40 is converted by the cyclone body 41 and conical section 42 to a circular motion, centrifugal force is applied, and classification results. Fibers, which are larger and denser than the ink particles, move to the lower discharge port 40b, and the relatively small, low density ink particles are carried by the airflow to the upper discharge port 40c as dust. Ink particles are then discharged from the upper discharge port 40c of the classifier 40. The discharged ink particles are then recovered through a conduit 206 connected to the upper discharge port 40c of the classifier 40 into a receiver 80. The classified material containing the fiber is then conveyed from the lower discharge port 40b of the classifier 40 through a conduit 203 toward the separator 50. The material may be conveyed from the classifier 40 to the separator 50 by the air flow from classification, or conveyed by gravity from the upper classifier 40 to the lower separator 50. Note that a suction unit for efficiently suctioning the short fiber mixture from the upper discharge port 40c may also be disposed to the upper discharge port 40c of the classifier 40 or the conduit 206, for example. Classification does not precisely separate defibrated material at a cut point of a particular size or density. Classification also does not precisely separate fiber and ink particles. Relatively short fibers in the fiber are discharged with the ink particles from the upper discharge port 40c. Relatively large ink particles are similarly discharged with fiber from the lower discharge port 40b.

The separator 50 selectively passes and separates the classified material (defibrated material) containing fiber that was classified by the classifier 40 through a foraminous sieve 51. More specifically, the separator 50 separates the classified material including fiber that was classified by the classifier 40 into passed material that passes through the sieve, and remnants that do not pass through. The separator 50 in this embodiment has a mechanism that disperses the classified material into air by a rotary movement. The passed material that past through the sieve by the separation process of the separator 50 is conveyed from a passed-material conveyor 52 through a conduit 204 to the forming unit 100 side. Remnants that did not pass through the sieve in the separation process of the separator 50 are returned as undefibrated material to the defibrating unit 30 through another conduit 205. As a result, the remnants are recycled (reused) instead of being discarded as waste.

The forming unit 100 forms sheets using at least part of the defibrated material defibrated by the defibrating unit 30 by heating and pressurizing, and cutting. The forming unit 100 in this embodiment includes an air-laying unit 70, heating and pressurizing unit 110, and cutting unit 130. In the forming unit 100, conveyance of the web W (sheet) is in the direction of the shorter of the four sides of the sheet Pr. More specifically, the web W (sheet) is conveyed so that the width of the conveyed web W corresponds to the long side of the four sides of the sheet Pr. In this embodiment, the sheet Pr conveyed in the short direction is sheet Pr of a common size. The common size is the size of sheet that is most widely used in common applications (where such sheets are used), such as A4-size sheets Pr. The conveyance direction of A4-size sheets Pr is the direction parallel to the short side of an A4-size sheet. Note that the dimension in the conveyance direction of the web W when conveyed in the short direction of the four sides of the sheet Pr, and the dimension along the short side of the sheet Pr, are not completely identical, and includes a slight margin.

The passed material that past through the holes in the separation process of the separator 50 is conveyed by air through the conduit 204 to the air-laying unit 70. Material may be conveyed by a blower not shown that produces an air flow from the separator 50 to the air-laying unit 70, or be conveyed by gravity from the separator 50 above to the air-laying unit 70 below. An additive agent feed unit 60 for adding an additive such as a bonding resin (a thermoplastic resin or thermosetting resin, for example) to the passed material being conveyed is also disposed to the conduit 204 between the separator 50 and the air-laying unit 70. In addition to bonding resin, additives such as flame retardants, bleaching agents, paper strengtheners, sizing agents, absorption regulators, aromatic agents, and deodorizers. These additives are stored in an additive hopper 61 and introduced through a loading port 62 by a loader mechanism not shown.

The air-laying unit 70 can accumulate material including fiber, and deposits, in air, at least part of the defibrated material defibrated by the defibrating unit 30. More specifically, the air-laying unit 70 deposits and forms a web W using material including fiber and bonding resin introduced from the conduit 204, and has a mechanism for evenly distributing the fiber in air. The air-laying unit 70 also has a conveyor unit on which, while moving, the defibrated material accumulates as a mat (web W). The conveyor unit in this embodiment includes tension rollers 72 and an endless mesh belt 73 made of mesh. The mesh belt 73 is tensioned by the tension rollers 72. The mesh belt 73 rotates (moves) in one direction by at least one of the tension rollers 72 turning. A web W in this embodiment is a formed object containing fiber and bonding resin. As a result, even if the form, such as the size, changes while heating and pressurizing, cutting, or conveying the web, it is still referred to as a web.

As a mechanism for evenly distributing fiber in air, a forming drum 71, into which fiber and bonding resin are loaded, is disposed to the air-laying unit 70. By rotationally driving the forming drum 71, bonding resin (additive) can be uniformly mixed with the passed material (fiber). A foraminous screen is disposed to the forming drum 71. By rotationally driving the forming drum 71, resin (additive) can be mixed uniformly with the passed material (fiber), and a mixture of fiber or combinations of fiber and bonding resin that past the holes in the screen can be uniformly distributed in air.

The mesh belt 73 is disposed below the forming drum 71. A suction device 75 that produces a downward flow of air is disposed as a suction unit directly below the forming drum 71 with the mesh belt 73 therebetween. The suction device 75 pulls the fibers suspended in air down onto the mesh belt 73.

The fiber and other material that past through the foraminous screen of the forming drum 71 is deposited onto the mesh belt 73 by the suction power of the suction device 75. By moving the mesh belt 73 in one direction, the fibers and bonding resin can be deposited to form a continuous web W. A web W formed in a continuous ribbon is formed by continuous distribution from the forming drum 71 and movement of the mesh belt 73. Note that the mesh belt 73 may be made of metal, plastic, or nonwoven cloth, and may be configured in any way enabling fibers to accumulate thereon and air to pass therethrough. Note that if the mesh of the mesh belt 73 is too large, fibers may get into the mesh and result in uneven spots in the formed web W (sheet); and if the mesh is too small, it is difficult for the suction device 75 to maintain a stable air flow. As a result, the size of the mesh is preferably desirably adjusted. The suction device 75 can be constructed by forming an air-tight box with a window of a desirable size below the mesh belt 73, and pulling air in through the window so that the pressure inside the box is lower than the ambient pressure.

The web W formed on the mesh belt 73 is conveyed in the conveyance direction (indicated by the white arrows in the figure) by rotational movement of the mesh belt 73. An intermediate conveyance unit 90 is disposed above the mesh belt 73, and the web W formed on the mesh belt 73 is conveyed by the intermediate conveyance unit 90 to the heating and pressurizing unit 110 side. The intermediate conveyance unit 90 is configured to convey the web W while pulling the web W up (the direction in which the web W separates from the mesh belt 73). The intermediate conveyance unit 90 is disposed vertically (the direction vertically above the surface of the web W) separated from the mesh belt 73, with part of the intermediate conveyance unit 90 downstream from the mesh belt 73 in the conveyance direction of the web W. The intermediate conveyance unit 90 conveys the web W from the downstream tension roller 72a of the mesh belt 73 to the heating and pressurizing unit 110.

The intermediate conveyance unit 90 includes a conveyor belt 91, multiple tension rollers 92, and a suction chamber 93. The conveyor belt 91 is an endless mesh belt made of mesh, and is tensioned by the tension rollers 92. The conveyor belt 91 rotates (moves) in one direction by at least one of the multiple tension rollers 92 turning.

The suction chamber 93 is located inside the conveyor belt 91, is shaped like an empty box with a top, four sides connected to the top, and an open bottom (the side facing the conveyor belt 91 located therebelow). The suction chamber 93 has a suction unit that produces an air flow (suction power) inside the suction chamber 93. By driving the suction unit, suction is produced in the space inside the suction chamber 93, and air flows in from the bottom of the suction chamber 93. As a result, an upward air flow through the suction chamber 93 is produced, the web W can be pulled from above the web W, and the web W can be pulled against the conveyor belt 91. By the tension rollers 92 then moving (turning), the conveyor belt 91 can convey the web toward the heating and pressurizing unit 110. Because the suction chamber 93 is disposed in part overlapping the mesh belt 73 when seen from above, and extends to a downstream position not overlapping the suction device 75, the web W on the mesh belt 73 can be separated from the mesh belt 73 and pulled against the conveyor belt 91 at a position opposite the suction chamber 93. The tension rollers 92 rotate so that the conveyor belt 91 moves at the same speed as the mesh belt 73. If there is a difference between the speeds of the mesh belt 73 and conveyor belt 91, the web W may be pulled and tear or buckle.

The heating and pressurizing unit 110 heats and compresses the web W deposited and laid by the air-laying unit 70. The heating and pressurizing unit 110 bonds the fibers in the web W through the bonding resin. The heating and pressurizing unit 110 also compresses the web W to approximately 1/5 to 1/30 the thickness of the web W that was formed by the air-laying unit 70. The heating and pressurizing unit 110 has a pair of calender rolls 111, 112. A heater or other heating member is disposed in the rotational center part of the pair of calender rolls 111, 112, and the conveyed web W can be heated and compressed by the web W passing between the pair of calender rolls 111, 112. By being heated and compressed by the pair of calender rolls 111, 112, bonding resin in the web W melts and becomes interlocked with the fibers, the distance between fibers is reduced, and the points of contact between fibers increase.

On the downstream side of the heating and pressurizing unit 110 in the conveyance direction are disposed, as a cutting unit 130 for cutting the web W, a first cutter 131 that cuts the web W along the conveyance direction, and a second cutter 132 that cuts the web W in the direction crosswise to the conveyance direction.

The first cutter 131 is, for example, a slitter, and can cut the web W to half the length of the common size of sheet Pr (web W). For example, if the sheet Pr is conveyed in the short direction of an A4 sheet as the common size, the first cutter 131 cuts to a size (length) the half the length of an A4 sheet. In this example, by cutting the length of an A4 sheet in half, the web W is cut to the size of the short side of an A5 sheet. By the second cutter 132 then cutting the web W perpendicularly to the conveyance direction, the web W can be cut into an A5 size sheet Pr.

The second cutter 132 is a rotary cutter, for example, and can cut to twice the size of the short side of a sheet Pr (web W) of a common size. For example, if the sheet Pr is conveyed in the short direction of an A4 sheet as the common size, the second cutter 132 cuts to twice the size (length) of the short side of an A4 sheet. In this example, by cutting at twice the dimension of the short side of an A4 sheet, the sheet Pr can be cut to the size of the long side of an A3 sheet.

The sheets Pr (web W) cut to the desired size are then stocked in a stacker 160. Note that a pair of conveyance rollers 140 that convey the web W is disposed between the first cutter 131 and second cutter 132. Between the second cutter 132 and stacker 160 is disposed another pair of conveyance rollers 150 that convey the web W. Sheets Pr can be manufactured by the sheet manufacturing apparatus 1 as described above.

A sheet in this embodiment of the invention refers primarily to sheet products that are manufactured from feedstock containing fiber such as recovered paper or pulp sheet. The feedstock is not so limited, however, and may be in the form of paperboard or web (or corrugated). The feedstock may also contain cellulose or other type of plant fiber, synthetic fiber such as PET (polyethylene terephthalate) and polyester, or wool, silk, or other animal fiber. Sheets as referred to herein are separated into paper and nonwoven cloth. Paper includes recording paper for handwriting and printing, including thin sheets; wall paper; packaging paper; color paper; and bristol paper, for example. Nonwoven cloth includes products that are thicker or have lower strength than paper, and includes nonwoven cloth, fiberboard, tissue paper, kitchen paper, cleaning paper, filter paper, liquid absorption materials, sound absorption materials, cushioning materials, and mats, for example.

Recovered paper as used in this embodiment mainly refers to paper that has been previously printed on, but any paper product that is used as feedstock is considered recovered paper whether or not the paper was actually used.

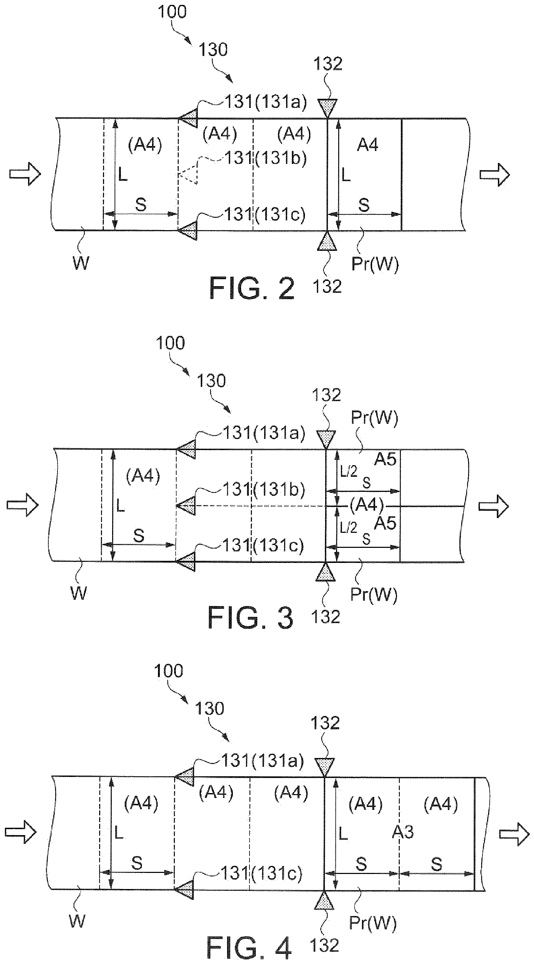

The configuration of the cutting unit is described below with reference to specific examples. FIG. 2 to FIG. 4 are plan views of the configuration of the cutting unit.

A configuration in which the conveyance direction of the sheet (web W) in the forming unit 100 is the direction of the short side of an A4-size sheet (web W), and A4-size sheets Pr are manufactured, is described first.

As shown in FIG. 2, a first cutter 131 on the upstream side in the conveyance direction, and a second cutter 132 on the downstream side of the first cutter 131 in the conveyance direction, are disposed as a cutting unit 130. The first cutter 131 is disposed to cut along the direction of the conveyance direction of the web W. In this embodiment, there are three first cutters 131 (131a, 131b, 131c) disposed on an imaginary line crosswise to the conveyance direction. First cutter 131a is disposed to a position to cut one edge of the web W perpendicular to the conveyance direction of the sheet (web W), and first cutter 131c is disposed to a position to cut the other edge of the web W perpendicular to the conveyance direction of the sheet (web W). First cutter 131b is disposed at a position between first cutter 131a and first cutter 131c. Note that all of the first cutters 131 (131a, 131b, 131c) do not need to be aligned on the same imaginary line perpendicular to the conveyance direction, and the first cutters 131 (131a, 131b, 131c) may be offset from each other in the conveyance direction. These first cutters 131 (131a, 131b, 131c) are also disposed at the same height as the height of the conveyed web W. The first cutter 131b also has a lift mechanism, and as needed can be moved to a position at a different height than the other first cutters 131a, 131c. As shown in FIG. 2, when manufacturing A4-size sheets Pr, first cutter 131b is raised by the lift mechanism to a position removed upward from the web W surface. More specifically, first cutter 131b is not used in this case.

When an A4-size sheet (web W) is conveyed in the short side direction to the first cutter 131 (131a, 131c), the web W is cut by the first cutter 131 (131a, 131c) along the conveyance direction of the web W. In this case, the web W is cut to the length L of an A4-size sheet by first cutter 131a and first cutter 131c. In other words, excess parts of the web W are removed. Because the web W is conveyed in the direction of the short side of an A4-size sheet, and the width of the web W is slightly greater than the length L (long side) of an A4-size sheet, the amount that is removed by cutting with first cutters 131a, 131c is small. More specifically waste is reduced and material can be used more efficiently.

Next, the web W is cut in the direction perpendicular to the conveyance direction by the second cutter 132 located downstream from the first cutter 131 in the conveyance direction. In this case, the second cutter 132 is driven at each length of the width S of an A4-size sheet to cut the web W. As a result, an A4-size sheet Pr of length L and width S is produced.

A configuration in which the conveyance direction of the sheet (web W) in the forming unit 100 is the direction of the short side of an A4-size sheet (web W), and A5-size sheets Pr, which are half the size of an A4 sheet (length L, width S), are manufactured, is described next. In this case, the length of the manufactured A5-size sheet Pr is equal to the width S of an A4-size sheet Pr, and the width of the A5-size sheet Pr is half the length L of an A4-size sheet Pr (L/2).

As shown in FIG. 3 a first cutter 131 on the upstream side in the conveyance direction, and a second cutter 132 on the downstream side of the first cutter 131 in the conveyance direction, are disposed as a cutting unit 130. The first cutter 131 is disposed to cut along the direction of the conveyance direction of the web W. In this embodiment, there are three first cutters 131 (131a, 131b, 131c) disposed on an imaginary line crosswise to the conveyance direction. First cutter 131a is disposed to a position to cut one edge of the web W perpendicular to the conveyance direction of the sheet (web W), and first cutter 131c is disposed to a position to cut the other edge of the web W perpendicular to the conveyance direction of the sheet (web W). First cutter 131b is disposed at a position between first cutter 131a and first cutter 131c. Note that all of the first cutters 131 (131a, 131b, 131c) do not need to be aligned on the same imaginary line perpendicular to the conveyance direction, and the first cutters 131 (131a, 131b, 131c) may be offset from each other in the conveyance direction. These first cutters 131 (131a, 131b, 131c) are also disposed at the same height as the height of the conveyed web W. The first cutter 131b also has a lift mechanism, and as needed can be moved to a position at a different height than the other first cutters 131a, 131c.

When an A4-size sheet (web W) is conveyed in the short side direction to the first cutter 131 (131a, 131b, 131c), the first cutter 131 (131a, 131b, 131c) cuts the web W along the conveyance direction of the web W. In this case, the web W is cut to the length L of an A4-size sheet by first cutter 131a and first cutter 131c. In other words, excess parts of the web W are removed. Because the web W is conveyed in the direction of the short side of an A4-size sheet, and the width of the web W is slightly greater than the length L (long side) of an A4-size sheet, the amount that is removed by cutting with first cutters 131a, 131c is small. More specifically waste is reduced and material can be used more efficiently. The sheet (web W) is also cut to the size (length) of half (L/2) the length L of an A4-size web W by the first cutter 131b, which is between first cutter 131a and first cutter 131c.

Next, the web W is cut in the direction perpendicular to the conveyance direction by the second cutter 132 located downstream from the first cutter 131 in the conveyance direction. In this case, the second cutter 132 is driven at each length of the width S of an A4-size sheet to cut the web W. As a result, an A5-size sheet Pr of length L and width S is produced. More specifically, the sheet (web W) is conveyed in the short-side direction of the A4-size sheet (web W), and two sheets Pr of A5-size, which is half A4-size, are produced.

A configuration in which the conveyance direction of the sheet (web W) in the forming unit 100 is the direction of the short side of an A4-size sheet (web W), and A3-size sheets Pr, which are twice the size of an A4 sheet (length L, width S), are manufactured, is described next. In this case, the length of the manufactured A3-size sheet Pr is equal to twice the width S (2S) of an A4-size sheet Pr, and the width of the A3-size sheet Pr is the length L of an A4-size sheet Pr.

As shown in FIG. 3 a first cutter 131 on the upstream side in the conveyance direction, and a second cutter 132 on the downstream side of the first cutter 131 in the conveyance direction, are disposed as a cutting unit 130. The first cutter 131 is disposed to cut along the direction of the conveyance direction of the web W. In this embodiment, there are two first cutters 131 (131a, 131c) disposed on an imaginary line crosswise to the conveyance direction. First cutter 131a is disposed to a position to cut one edge of the web W perpendicular to the conveyance direction of the sheet (web W), and first cutter 131c is disposed to a position to cut the other edge of the web W perpendicular to the conveyance direction of the sheet (web W). These first cutters 131a, 131c are also disposed at the same height as the height of the conveyed web W.

When an A4-size sheet (web W) is conveyed in the short side direction to the first cutter 131 (131a, 131c), the first cutter 131a, 131c cuts the web W along the conveyance direction of the web W. In this case, the web W is cut to the length L of an A4-size sheet by first cutter 131a and first cutter 131c. In other words, excess parts of the web W are removed. Because the web W is conveyed in the direction of the short side of an A4-size sheet, and the width of the web W is slightly greater than the length L (long side) of an A4-size sheet, the amount that is removed by cutting with first cutters 131a, 131c is small. More specifically waste is reduced and material can be used more efficiently.

Next, the web W is cut in the direction perpendicular to the conveyance direction by the second cutter 132 located downstream from the first cutter 131 in the conveyance direction. In this case, the second cutter 132 is driven at a length of twice the length of the width S of an A4-size sheet to cut the web W. As a result, an A3-size sheet Pr is produced. More specifically, the sheet (web W) is conveyed in the short-side direction of the A4-size sheet (web W), and one sheet Pr of A3-size, which is twice A4 size, is produced.

Effects of this embodiment are described below.

Because the width of the web W is roughly the length of the long side of the sheet Pr, and the sheet Pr is conveyed in the direction of the short side of the sheet Pr, the number of sheets Pr that can be conveyed per unit time is greater than when the sheet Pr is conveyed in the lengthwise direction. Sheet productivity can therefore be increased. Furthermore, based on the short side of the conveyed sheet Pr (A4-size, for example), both A5-size sheets Pr, which are half the size of an A4-size sheet Pr, and A3-size sheets Pr, which are twice the size of an A4-size sheet Pr, can be easily manufactured.

The present invention is not limited to the foregoing embodiment, and the foregoing embodiment can be modified and improved in many ways. Some examples are described below.

### (Example 1)

The embodiment shown in FIG. 3 above has three first cutters 131 (131a, 131b, 131c), but the invention is not so limited. There may be only two first cutters 131. The first cutter 131 in this case is movable. This also enables cutting a common size of sheet Pr to half the length.

### (Example 2)

The embodiment described above is configured to drive a second cutter 132 at the length of the width S of an A4-size sheet, and manufacture A5-size sheets Pr, which are half the size of A4, but the invention is not so limited. For example, the second cutter 132 may be driven at a length of half (S/2) the length of the width S of A4, and A6-size sheets Pr, which are 1/4 the size of A4, may be manufactured. This configuration also achieves the effects described above.

### (Example 3)

The first cutter 131 is disposed on the upstream side, and the second cutter 132 is disposed on the downstream side, in the conveyance direction of the web W in the foregoing embodiment, but the invention is not so limited. The second cutter 132 may be on the upstream side, and the first cutter 131 on the downstream side. This configuration also achieves the effects described above.

### (Example 4)

An A4-size sheet Pr is used as an example of a sheet Pr of a common size in the foregoing embodiment, but the invention is not so limited. The sheet Pr of a common size may be any size of sheet that is widely and commonly used, in a particular country or region, or by a specific governmental, educational, or other type of organization. For example, A-series sheets other than A4 size, B-series sheets (such as B5), and US letter and legal size sheets such as used primarily in the United States, may be used as common size sheets Pr. This configuration also achieves the effects described above.

### (Example 5)

A intermediate conveyance unit 90 is used as a separating means to separate the web W from the mesh belt 73 in the embodiment described above, but the invention is not so limited. For example, a scraper may be used as the separating means. As described above, this configuration also enables separating and conveying the web W from the mesh belt 73 to the heating and pressurizing unit 110.

### [Reference Signs List]

- 1: sheet manufacturing apparatus
- 10: supply unit
- 20: shredder
- 30: defibrating unit
- 40: classifier
- 50: separator
- 60: additive agent feed unit
- 70: air-laying unit
- 90: intermediate conveyance unit
- 100: forming unit
- 110: heating and pressurizing unit
- 130: cutting unit
- 131, 131a, 131b, 131c: first cutters
- 132: second cutter
- 160: stacker

## Claims

1. A sheet manufacturing apparatus comprising:
a defibrating unit able to defibrate, in air, feedstock containing fiber; and
a forming unit forming sheets, using at least part of defibrated material defibrated by the defibrating unit, by heating and pressurizing, and cutting;
the forming unit **characterized by** the conveyance direction of the sheet being the short-side direction of the sheet.

2. The sheet manufacturing apparatus described in claim 1, wherein:
the sheet conveyed in the short-side direction is a sheet of a common size;
the cutting unit in the forming unit has a first cutter that cuts in the direction along the conveyance direction; and
the first cutter can cut to a size half the long side of the sheet of the common size.

3. The sheet manufacturing apparatus described in claim 1 or claim 2, wherein:
the cutting unit in the forming unit has a second cutter that cuts perpendicularly to the conveyance direction; and
the second cutter can cut to a size twice the length of the short side of a common size sheet.

4. The sheet manufacturing apparatus described in any of claims 1 to 3, wherein:
the feedstock containing fiber is recovered paper;
the size of the recovered paper is the same as the common size; and
the recovered paper is conveyed in the direction of the longer of the four sides of the recovered paper.

5. A sheet manufacturing apparatus comprising:
a laying unit that deposits material containing fiber and resin; and
a cutting unit that cuts the web in a direction transverse to the conveyance direction in which the web deposited by the laying unit is conveyed;
wherein the length of the direction transverse to the conveyance direction of the web is equal to or longer than the length of the long side of the sheet.

6. A sheet manufacturing method enabling defibrating, in air, feedstock containing fiber, and forming sheets, using at least part of the defibrated material, by heating and pressurizing, and cutting,
wherein the conveyance direction of the sheet is the direction of the short side of the sheet.

7. A sheet manufacturing method of depositing material containing fiber and resin, and
cutting the deposited web in a direction transverse to the conveyance direction in which the deposited web is conveyed;
wherein the material is deposited so that the length of the direction transverse to the conveyance direction of the deposited web is equal to or longer than the length of the long side of the sheet.
